# EUROPÄISCHE PATENTSCHRIFT

(11) **EP 3 797 843 B1**
(45) Veröffentlichungstag und Bekanntmachung des Hinweises auf die Patenterteilung: **18.03.2026**
(21) Anmeldenummer: 20190499.2
(22) Anmeldetag: 11.08.2020
(51) Int. Cl.: C08K 3/22, A63C 11/14, A63C 5/056

(54) **REAKTIONSFÄHIGES KUNSTSTOFFPULVER, VERFAHREN ZU DESSEN HERSTELLUNG, SOWIE VERWENDUNG DESSELBEN**
REACTIVE SYNTHETIC POWDER, METHOD FOR ITS PREPARATION, AND USE OF THE SAME
POUDRE DE MATIÈRE PLASTIQUE RÉACTIVE, SON PROCÉDÉ DE FABRICATION AINSI QUE SON UTILISATION

(30) Priorität: 04.09.2019 CH 11172019
(43) Veröffentlichungstag der Anmeldung: 31.03.2021
(73) Patentinhaber: Eiselin, Andreas, 6390 Engelberg (CH)
(72) Erfinder: Eiselin, Andreas, 6390 Engelberg (CH)
(74) Vertreter: Troesch Scheidegger Werner AG

(56) Entgegenhaltungen:
- EP-B1- 0 900 252
- US-A- 2 622 056
- US-A- 3 126 311
- US-A- 3 457 129
- US-A- 5 122 418

## Beschreibung

Die vorliegende Erfindung betrifft ein reaktionsfähiges Kunststoffpulver, ein Verfahren zu dessen Herstellung, sowie die Verwendung des reaktionsfähigen Kunststoffpulvers.

Bei Schneegleitbrettern, insbesondere Skis und Snowboards, kann es an der Unterseite bei versehentlichem Drüberfahren über Steine oder andere harte Fremdkörper im Schnee zu Kratzern oder Kerben im Gleitbelag kommen. Der Gleitbelag ist eine Kunststoff-Beschichtung der Lauffläche eines Schneegleitbrettes. Beim Kunststoff des Gleitbelages handelt es sich in der Regel um Polyolefine, insbesondere um Polyethylene in extrudierter oder gesinterter Form, in den meisten Fällen um HDPE (High Density Polyethylene). Ein beschädigter Gleitbelag kann das Fahrverhalten eines solchen Sportgerätes negativ beeinflussen, und bildet überdies eine Angriffsstelle für zusätzliche mögliche Schäden an der Unterseite des Schneegleitbrettes. Deshalb ist bei einem derart beschädigten Kunststoffbelag jeweils eine Reparatur notwendig.

Bei einer gängigen Reparaturmethode wird nach Reinigung der beschädigten Stelle eine sogenannte «Repair Candle» (dünner Stab aus Polyethylen) an der Spitze angezündet, die brennende «Repair Candle» über die zu reparierende Stelle gehalten und die Schadstelle im Belag mit abtropfendem flüssigem Polyethylen aufgefüllt. Nach dem Erkalten wird überschüssiges Material mit einer Metall-Abziehklinge entfernt. Die mit der «Repair Candle» reparierten Schadstellen neigen allerdings zum Verspröden, und bröckeln manchmal wieder heraus. Zudem bilden sich bei tieferen Schadstellen oft Senkdellen, zum einen durch Schrumpfung, und weil das lückenlose Auffüllen einer Schadstelle durch Auftropfen schwierig ist.

Im Patent US 3,457,129 wird eine Methode zum Reparieren von Ski-Gleitbelägen beschrieben, bei welcher zunächst ein Pulver von HDPE (High Density Polyethylene) in die vertiefte Schadstelle des Gleitbelags und noch etwas höher als der Rand der Schadstelle geschüttet und angepresst wird. Sodann wird eine hitzebeständige und nicht haftende Folie aus Polytetrafluorethylen (PTFE, als Teflon^{®} bekannt) über die Flickstelle gelegt, und dann von oben ein heisses Bügeleisen draufgepresst, so dass das HDPE-Pulver unter der PTFE-Folie schmilzt und sich mit dem die Schadstelle umgebenden und angeschmolzenen Polyethylen-Material des Gleitbelags verbindet. Nach Entfernen des Bügeleisens und Abkühlen der Flickstelle wird die PTFE-Folie abgelöst.

Neben den geschilderten Methoden, die Feuer oder externe Hitze zum Schmelzen von Polyethylen erfordern, wurden zum Ausbessern von beschädigten Kunststoffbelägen auch schon Füllstoffe zusammen mit Klebstoffen, beispielsweise mit Cyanacrylat-Klebern, verwendet. Cyanacrylat-Kleber (auch Cyanoacrylat genannt und unter der Bezeichnung «Sekundenkleber» bekannt) funktionieren aber nur mit mineralischen Füllstoff-Pulvern, weil letztere mit ihrer polaren und Feuchtigkeit anziehenden Oberfläche die anionische Polymerisation der Cyanoacrylat-Monomere zur Aushärtung dieses Klebstoffs auslösen können. Der Nachteil solcher Flickstellen ist aber, dass sie sich wegen des mineralischen Füllstoffs in ihren Eigenschaften vom Originalmaterial eines Kunststoffbelags unterscheiden und wegen der fehlenden Homogenität stören. Falls der Kunststoffbelag ein Gleitbelag ist, wird zudem das Gleitverhalten beeinträchtigt.

Da sich unpolare Polyolefine wie Polyethylen (PE) und Polypropylen (PP) kaum mit Cyanacrylat verkleben lassen, gab es Versuche, diesen Mangel durch Modifikationen zu beseitigen. Die Patentschrift EP 0 900 252 B1 beschreibt Polyolefinmassen mit verbesserter Verklebbarkeit insbesondere gegenüber Cyanacrylat-Klebern. Als Lösung wird in der EP 0 900 252 B1 vorgeschlagen, dem betreffenden Polyolefin während der Verarbeitung in der Schmelze, zum Beispiel bei der Extrusion vor der abschliessenden Formgebung, gewisse Additive zuzumischen und in die Schmelzmasse einzuarbeiten, welche in der Lage sind, die Polymerisation und das Aushärten von Cyanacrylat-Klebstoffen zu initiieren. Diese Polymerisations-Initiatoren sollen einerseits mit dem Polyolefin gut vermischbar sein, andererseits aber polare Gruppen aufweisen, die später beim Verkleben eines Formkörpers aus diesem modifizierten Polyolefin den Start der Polymerisation der Cyanoacrylat-Monomere ermöglichen. Als geeignete Polymerisationsinitiatoren werden 2-Phenylimidazolin, 1,8-Diazabicyclo(5.4.0)undec-7-en (DBU) und 1,5-Diazabicyclo(4.3.0)non-5-en (DBN) genannt. Die Herstellung von derart modifizierten Polyolefinmassen in Schmelze-Extrudern ist aber apparativ aufwändig, und die benötigten chemischen Additive sind relativ komplex.

Aufgabe der vorliegenden Erfindung ist es, die aus dem Stand der Technik bekannten Nachteile zu vermeiden und ein reaktionsfähiges Kunststoffpulver zur Verfügung zu stellen, welches ohne Schmelze-Verarbeitung herstellbar ist, und welches ohne Anwendung von Feuer, externer Hitze oder Elektrizität für Reparaturen von Kunststoffteilen geeignet ist. Unter Kunststoffteilen werden dabei beliebige Teile aus Kunststoff, im Besonderen auch Kunststoffbeläge und Kunststoffbeschichtungen verstanden.

Diese Aufgabe wird durch ein reaktionsfähiges Kunststoffpulver mit den Merkmalen des Anspruchs 1 gelöst.

Die vorliegende Erfindung bezieht sich auch auf ein Verfahren nach Anspruch 6 zur Herstellung eines erfindungsgemässen reaktionsfähigen Kunststoffpulvers.

Die Erfindung umfasst zudem die Verwendung eines erfindungsgemässen reaktionsfähigen Kunststoffpulvers für Reparaturen von Kunststoffteilen, insbesondere von Kunststoffbelägen.

Zum Schutzbereich der vorliegenden Erfindung gehören auch erfindungsgemäss reparierte Kunststoffteile und Gegenstände mit entsprechend reparierten Kunststoffbelägen bzw. Kunststoffbeschichtungen. Die Begriffe «Kunststoffbelag» und «Kunststoffbeschichtung» können im synonymen Sinne verstanden werden.

Bevorzugte erfindungsgemässe Ausführungsformen und Varianten ergeben sich aus den jeweils abhängigen Ansprüchen.

Ein reaktionsfähiges Kunststoffpulver gemäss der vorliegenden Erfindung ist oberflächenbehandelt und weist dadurch an seiner Oberfläche mindestens einen alkalischen Stoff auf. Oberflächenbehandelt heisst, dass die Oberflächenbeschaffenheit durch eine von aussen auf die Oberfläche der Kunststoffpulver-Teilchen einwirkende Behandlung verändert wurde.

Der mindestens eine alkalische Stoff an der Oberfläche des reaktionsfähigen Kunststoffpulvers ist ausgewählt aus der Gruppe umfassend Natriumhydroxid und Kaliumhydroxid, wobei Natriumhydroxid besonders bevorzugt ist.

Das erfindungsgemässe reaktionsfähige Kunststoffpulver basiert auf einem Polymer, bei welchem es sich bevorzugt um ein Polyolefin handelt. Das Polyolefin ist bevorzugt ausgewählt aus der Gruppe umfassend Polyethylen und Polypropylen, wobei Polyethylen besonders bevorzugt ist. Ganz besonders bevorzugt ist das Polyethylen ein HDPE, d.h. ein High Density Polyethylene.

Das erfindungsgemässe reaktionsfähige Kunststoffpulver weist bevorzugt eine Körnung zwischen 0 µm und 400 µm auf, besonders bevorzugt zwischen 0 µm und 300 µm, und ganz besonders bevorzugt zwischen 0 µm und 200 µm.

Beim Verfahren gemäss der vorliegenden Erfindung zur Herstellung eines erfindungsgemässen reaktionsfähigen Kunststoffpulvers wird ein unbehandeltes Kunststoffpulver einer gewissen Körnung mit einer damit verträglichen Flüssigkeit zu einer Suspension vermischt, wobei zu dieser Flüssigkeit vor oder nach dem Vermischen mit dem unbehandelten Kunststoffpulver eine alkalische Lösung enthaltend mindestens einen alkalischen Stoff zugegeben wird, und nach dem Vermischen der genannten Komponenten die Suspension eingedampft und der Eindampfrückstand getrocknet wird, und auf diese Weise ein oberflächenbehandeltes, rieselfähiges und reaktionsfähiges Kunststoffpulver mit im Wesentlichen der ursprünglichen Körnung erhalten wird, welches an seiner Oberfläche den mindestens einen alkalischen Stoff aufweist. Die Anlagerung des alkalischen Stoffs an der Oberfläche des Kunststoffpulvers während der Eindampfung und Trocknung entspricht der Oberflächenbehandlung.

Beim Polymer des unbehandelten Kunststoffpulvers handelt es sich bevorzugt um ein Polyolefin, besonders bevorzugt um HDPE, und bei der damit verträglichen Flüssigkeit bevorzugt um Ethanol mit einem Reinheitsgrad von mindestens 95 Vol.-% oder um Petroleum.

Verträglich heisst in diesem Zusammenhang, dass sich das Kunststoffpulver in einer solchen Flüssigkeit zu einer Suspension dispergieren und vermischen lässt. Unverträglich hingegen wäre Wasser für ein PE-Pulver, weil PE-Pulver in Wasser verklumpen und sich nicht als Einzelteilchen dispergieren lassen würde.

Beim Ethanol mit Reinheitsgrad von mindestens 95 Vol.-% handelt es sich bevorzugt um Ethanol 96% oder um Bioethanol mit Reinheitsgrad von mindestens 99 Vol.-%. Als Ethanol ist auch Spiritus einsetzbar, also vergälltes Ethanol für technische Zwecke.

Beim erfindungsgemässen Verfahren wird zum Bilden der Suspension das unbehandelte Kunststoffpulver bevorzugt in die damit verträgliche Flüssigkeit eingerührt, und das Vermischen der Komponenten inklusive der zugegebenen alkalischen Lösung erfolgt bevorzugt in einem Rührgefäss bei Raumtemperatur. Bei der alkalischen Lösung handelt es sich um Natronlauge oder Kalilauge, wobei Natronlauge besonders bevorzugt ist.

Beim erfindungsgemässen Verfahren wird das Eindampfen der Suspension und das Trocknen des Eindampfrückstands bevorzugt in einem Kessel mit Rührwerk bei einer bevorzugten Temperatur im Bereich von 70 °C bis 85 °C durchgeführt, wobei durch das Rührwerk vorzugsweise eine permanente Umwälzung erfolgt, bis ein trockenes rieselfähiges Kunststoffpulver resultiert. Der erwähnte Kessel kann ein Metallkessel sein, in welchen die Suspension eingefüllt wird. Geheizt werden kann der Kessel mit verschiedenen dem Fachmann bekannten Heizquellen. Dieser Verfahrensschritt dauert erfahrungsgemäss ein paar Stunden.

Das Eindampfen und Trocknen kann aber auch in einem anderen Temperaturbereich und/oder mit anderen apparativen Mitteln erfolgen, z.B. auf einem Blech in einem Ofen oder in einem Trockenschrank, was ebenfalls im Rahmen des erfindungsgemässen Herstellungsverfahrens liegen würde.

Bei der Verwendung eines erfindungsgemässen reaktionsfähigen Kunststoffpulvers, bevorzugt hergestellt nach dem erfindungsgemässen Verfahren, zum Reparieren von Kunststoffteilen, insbesondere von schadhaften Stellen in Kunststoffbelägen, wird gemäss vorliegender Erfindung eine schadhafte, gereinigte Stelle in einem Kunststoffteil mit dem reaktionsfähigen Kunststoffpulver prall aufgefüllt und dieses flach angedrückt, und sodann ein Cyanoacrylat draufgeträufelt bis das reaktionsfähige Kunststoffpulver durchtränkt ist, wobei der an der Oberfläche des reaktionsfähigen Kunststoffpulvers anwesende alkalische Stoff die anionische Polymerisation des Cyanoacrylats initiiert und diese exotherme chemische Reaktion zu einer schnellen und dauerhaften Verbindung und Aushärtung der reparierten Stelle im Kunststoffteil führt.

Bei der Reparatur von Kunststoffbelägen ist insbesondere das Reparieren von schadhaften Stellen in Gleitbelägen von Schneegleitbrettern unter Verwendung des erfindungsgemässen reaktionsfähigen Kunststoffpulvers zusammen mit Cyanoacrylat bevorzugt.

Cyanoacrylate sind polymerisierbare flüssige Monomere. Das ausgewählte Cyanoacrylat ist bevorzugt ein Alkylcyanacrylat, besonders bevorzugt ausgewählt aus der Gruppe umfassend Methyl-2-cyanacrylat, Ethyl-2-cyanacrylat, n-Propyl-2-cyanacrylat und n-Butyl-2-cyanacrylat, wobei Ethyl-2-cyanacrylat ganz besonders bevorzugt ist. Durch die exotherme Polymerisation erwärmt sich die Reparaturstelle. Dabei kann kurzzeitig sogar die Erweichungstemperatur von Polyethylen erreicht werden, was die Festigkeit einer solchen Reparaturstelle durch ein partielles Anschmelzen noch erhöhen würde.

Je nach Farbe des zu reparierenden Kunststoffteils wird für das reaktionsfähige Kunststoffpulver bzw. schon für das anfänglich unbehandelte Kunststoffpulver vorzugsweise eine Einfärbung gewählt, die dem zu reparierenden Kunststoffteil entspricht. Bei Schneegleitbrettern wie Skis oder Snowboards ist der Gleitbelag oft schwarz. Entsprechend würde man, um ein farblich einheitliches Resultat zu erzielen, ein schwarz eingefärbtes Kunststoffpulver wählen. Am Schluss der Reparatur einer schadhaften Stelle in einem Kunststoffteil wird überschüssiges Material bevorzugt mit einer Metall-Abziehklinge abgetragen.

An dieser Stelle soll betont werden, dass die Verwendung des erfindungsgemässen reaktionsfähigen Kunststoffpulvers keineswegs auf das bevorzugte Reparieren von schadhaften Stellen in Gleitbelägen von Schneegleitbrettern beschränkt ist, sondern dass mit dem erfindungsgemässen Pulver beliebige Kunststoffteile repariert werden können, und es für verschiedenste Reparaturen von Kunststoffteilen verwendet werden kann. In erster Linie geht es bei den Reparaturen um das Ausbessern von durch mechanische Einwirkung entstandenen Kerben, Kratzern, Dellen, Einbeulungen oder allgemein gesagt Vertiefungen. Das Material des zu reparierenden Kunststoffteils kann auf Polymeren wie z.B. Polyolefinen, PVC, Polyurethan, Polyestern, Polycarbonat, Polystyrol, ABS oder Polyamiden basieren. Bei den Kunststoffteilen kann es sich um beliebige Gegenstände aus den Gebieten: Sport und Freizeit, Haushalt, Elektro und Elektronik, Bau und Industrie, Fahrzeugbau (für Fahrzeuge zu Lande, zu Wasser und in der Luft), Medizintechnik, Spielwaren, Verpackung etc. handeln. Als einzelne Beispiele seien genannt: Gehäuse von Computern und Mobiltelefonen, Bauteile für Automobile (z.B. eine Kunststoff-Stossstange oder ein Rückspiegel-Gehäuse), Schutzhelme, Brausen von Giesskannen, Gartenschläuchen oder Duschen, Kinderspielzeuge, Kunststoff-Kleiderbügel und andere Haushaltsartikel aus Kunststoff. Bei den Kunststoffteilen kann es sich auch um Kunststoff-Bodenbeläge oder Beschichtungen von Holz (z.B. von Möbeln) oder von Metall handeln.

Mit der vorliegenden Erfindung wird auch ein repariertes Kunststoffteil oder ein Gegenstand mit einem reparierten Kunststoffbelag beansprucht, wobei das Kunststoffteil bzw. der Kunststoffbelag unter Verwendung eines erfindungsgemässen reaktionsfähigen Kunststoffpulvers, das bevorzugt nach dem erfindungsgemässen Verfahren hergestellt worden war, zusammen mit Cyanoacrylat repariert wurde, wobei der Gegenstand mit dem Kunststoffbelag insbesondere ein Schneegleitbrett mit einem Gleitbelag ist.

Das folgende Beispiel der Herstellung eines reaktionsfähigen Kunststoffpulvers dient zur Erläuterung der vorliegenden Erfindung, ohne den Umfang der Erfindung einzuschränken: 100 g Polyethylen-Kunststoffpulver des Typs HDPE Black (schwarz) mit einer Körnung zwischen 0 µm und 180 µm wurden in ca. 100 ml Ethanol eingerührt und 2.5 ml einmolare Natronlauge (NaOH-Gehalt ca. 4 Gew.-%) dazu gemischt. Diese Suspension wurde 5 Minuten lang gerührt, und anschliessend eingedampft und getrocknet. So wurde ein erfindungsgemässes reaktionsfähiges Polyethylen-Kunststoffpulver erhalten.

Es soll darauf hingewiesen werden, dass beliebige Kombinationen der beschriebenen Merkmale zum Umfang der vorliegenden Erfindung gehören, solange die Kombinationen nicht inkonsistent sind.

Wie der Beschreibung zu entnehmen ist, wird mit der vorliegenden Erfindung eine vorteilhafte alternative Lösung für ein reaktionsfähiges Kunststoffpulver zur Verfügung gestellt. Dieses reaktionsfähige Kunststoffpulver ist ohne teure Schmelze-Verarbeitungsmaschinen herstellbar und kann auf einfache Weise ohne externe Energiezufuhr zum Reparieren beliebiger Kunststoffteile, z.B. von Kunststoffbelägen, insbesondere von Gleitbelägen von Schneegleitbrettern, zusammen mit Cyanoacrylat als Kleber, verwendet werden. Im Vergleich mit den Methoden des Standes der Technik kann eine erfindungsgemässe Reparatur dank der schnellen chemischen Reaktion deutlich schneller ausgeführt werden. Es schrumpft nichts, es entstehen keine Senkdellen, und es gibt kein Herausbröckeln von Material. Zudem haftet eine erfindungsgemässe Flickstelle im Gegensatz zum Stand der Technik auch sehr gut an den Metallkanten (in deren Bereich die meisten tiefen Kratzer entstehen) und am belagsfremden Kernmaterial, z.B. am Holz, carbonfaserverstärkten Kunststoff oder Metall eines Skis, und ergibt eine perfekte Verbindung zu all diesen Materialien. Mit der Erfindung resultieren hochwertige, belastbare, sehr gut haftende und dauerhaft beständige Kunststoff-Reparaturstellen mit zum Original-Kunststoffmaterial homogenen Materialeigenschaften und sehr hoher Haltbarkeit. Das gilt sowohl für Kunststoffbeläge und Kunststoffbeschichtungen als auch für Kunststoffteile beliebiger Form und Art.

## Patentansprüche

1. Reaktionsfähiges Kunststoffpulver zur Reparatur von Kunststoffteilen, **dadurch gekennzeichnet, dass** es oberflächenbehandelt ist und dadurch an seiner Oberfläche mindestens einen alkalischen Stoff ausgewählt aus der Gruppe bestehend aus Natriumhydroxid und Kaliumhydroxid aufweist.

2. Reaktionsfähiges Kunststoffpulver nach Anspruch 1, **dadurch gekennzeichnet, dass** der mindestens eine alkalische Stoff Natriumhydroxid ist.

3. Reaktionsfähiges Kunststoffpulver nach Anspruch 1 oder 2, **dadurch gekennzeichnet, dass** es auf einem Polymer basiert, bei welchem es sich um ein Polyolefin handelt.

4. Reaktionsfähiges Kunststoffpulver nach Anspruch 3, **dadurch gekennzeichnet, dass** das Polyolefin ausgewählt ist aus der Gruppe umfassend Polyethylen und Polypropylen, wobei Polyethylen bevorzugt ist, und wobei das Polyethylen bevorzugt ein HDPE ist.

5. Reaktionsfähiges Kunststoffpulver nach einem der vorhergehenden Ansprüche, **dadurch gekennzeichnet, dass** das reaktionsfähige Kunststoffpulver eine Körnung zwischen 0 µm und 400 µm, bevorzugt zwischen 0 µm und 300 µm, und besonders bevorzugt zwischen 0 µm und 200 µm aufweist.

6. Verfahren zur Herstellung eines reaktionsfähigen Kunststoffpulvers gemäss einem der Ansprüche 1 bis 5, **dadurch gekennzeichnet, dass** ein unbehandeltes Kunststoffpulver einer gewissen Körnung mit einer damit verträglichen Flüssigkeit zu einer Suspension vermischt wird, dass zu dieser Flüssigkeit vor oder nach dem Vermischen mit dem unbehandelten Kunststoffpulver eine alkalische Lösung enthaltend mindestens einen alkalischen Stoff zugegeben wird, dass nach dem Vermischen der genannten Komponenten die Suspension eingedampft und der Eindampfrückstand getrocknet wird, und auf diese Weise ein oberflächenbehandeltes, rieselfähiges und reaktionsfähiges Kunststoffpulver mit im Wesentlichen der ursprünglichen Körnung erhalten wird, welches an seiner Oberfläche den mindestens einen alkalischen Stoff aufweist.

7. Verfahren nach Anspruch 6, **dadurch gekennzeichnet, dass** es sich beim Polymer des unbehandelten Kunststoffpulvers um ein Polyolefin, bevorzugt HDPE, und bei der damit verträglichen Flüssigkeit um Ethanol mit einem Reinheitsgrad von mindestens 95 Vol.-% oder um Petroleum handelt.

8. Verfahren nach Anspruch 7, **dadurch gekennzeichnet, dass** es sich beim Ethanol mit Reinheitsgrad von mindestens 95 Vol.-% um Ethanol 96% oder um Bioethanol mit Reinheitsgrad von mindestens 99 Vol.-% handelt.

9. Verfahren nach einem der Ansprüche 6 bis 8, **dadurch gekennzeichnet, dass** zum Bilden der Suspension das unbehandelte Kunststoffpulver in die damit verträgliche Flüssigkeit eingerührt wird, und dass das Vermischen der Komponenten inklusive der zugegebenen alkalischen Lösung in einem Rührgefäss bei Raumtemperatur erfolgt.

10. Verfahren nach einem der Ansprüche 6 bis 9, **dadurch gekennzeichnet, dass** es sich bei der alkalischen Lösung um Natronlauge oder Kalilauge handelt, wobei Natronlauge bevorzugt ist.

11. Verfahren nach einem der Ansprüche 6 bis 10, **dadurch gekennzeichnet, dass** das Eindampfen der Suspension und das Trocknen des Eindampfrückstands in einem Kessel mit Rührwerk bei einer bevorzugten Temperatur im Bereich von 70 °C bis 85 °C durchgeführt wird, wobei durch das Rührwerk vorzugsweise eine permanente Umwälzung erfolgt, bis ein trockenes rieselfähiges Kunststoffpulver resultiert.

12. Verwendung eines reaktionsfähigen Kunststoffpulvers nach einem der Ansprüche 1 bis 5, bevorzugt hergestellt nach einem der Ansprüche 6 bis 11, zum Reparieren von schadhaften Stellen in Kunststoffteilen, insbesondere in Gleitbelägen von Schneegleitbrettern, **dadurch gekennzeichnet, dass** eine schadhafte, gereinigte Stelle in einem Kunststoffteil mit dem reaktionsfähigen Kunststoffpulver prall aufgefüllt und dieses flach angedrückt wird, und sodann ein Cyanoacrylat draufgeträufelt wird bis das reaktionsfähige Kunststoffpulver durchtränkt ist, wobei der an der Oberfläche des reaktionsfähigen Kunststoffpulvers anwesende alkalische Stoff die anionische Polymerisation des Cyanoacrylats initiiert und diese exotherme chemische Reaktion zu einer schnellen und dauerhaften Verbindung und Aushärtung der reparierten Stelle im Kunststoffteil führt.

13. Verwendung nach Anspruch 12, **dadurch gekennzeichnet, dass** das Cyanoacrylat ein Alkylcyanacrylat ist, bevorzugt ausgewählt aus der Gruppe umfassend Methyl-2-cyanacrylat, Ethyl-2-cyanacrylat, n-Propyl-2-cyanacrylat und n-Butyl-2-cyanacrylat, wobei Ethyl-2-cyanacrylat besonders bevorzugt ist.

14. Verwendung nach Anspruch 12 oder 13, **dadurch gekennzeichnet, dass** am Schluss der Reparatur einer schadhaften Stelle in einem Kunststoffteil überschüssiges Material mit einer Metall-Abziehklinge abgetragen wird.

15. Kunststoffteil oder Gegenstand mit einem Kunststoffbelag, **dadurch gekennzeichnet, dass** das Kunststoffteil bzw. der Kunststoffbelag unter Verwendung eines reaktionsfähigen Kunststoffpulvers gemäss einem der Ansprüche 1 bis 5, das bevorzugt nach einem der Ansprüche 6 bis 11 hergestellt worden war, gemäss einem der Ansprüche 12 bis 14 zusammen mit Cyanoacrylat repariert wurde, wobei der Gegenstand mit dem Kunststoffbelag insbesondere ein Schneegleitbrett mit einem Gleitbelag ist.

## Claims

1. Reactive plastic powder for repairing plastic parts, **characterized in that** it is surface-treated and thereby has on its surface at least one alkaline substance selected from the group consisting of sodium hydroxide and potassium hydroxide.

2. Reactive plastic powder according to claim 1, **characterized in that** the at least one alkaline substance is sodium hydroxide.

3. Reactive plastic powder according to claim 1 or 2, **characterized in that** it is based on a polymer which is a polyolefin.

4. Reactive plastic powder according to claim 3, **characterized in that** the polyolefin is selected from the group comprising polyethylene and polypropylene, wherein polyethylene is preferred, and wherein the polyethylene is preferably an HDPE.

5. Reactive plastic powder according to one of the preceding claims, **characterized in that** the reactive plastic powder has a grain size between 0 µm and 400 µm, preferably between 0 µm and 300 µm, and particularly preferably between 0 µm and 200 µm.

6. Process for producing a reactive plastic powder according to one of claims 1 to 5, **characterized in that** an untreated plastic powder of a certain grain size is mixed with a liquid compatible therewith to a suspension, **in that** an alkaline solution containing at least one alkaline substance is added to this liquid before or after mixing with the untreated plastic powder, **in that** after mixing the said components the suspension is evaporated and the evaporation residue is dried, and in this way a surface-treated, granulated and reactive plastic powder with substantially the original grain size is obtained, which has on its surface the at least one alkaline substance.

7. Process according to claim 6, **characterized in that** the polymer of the untreated plastic powder is a polyolefin, preferably HDPE, and the liquid compatible therewith is ethanol with a degree of purity of at least 95% by volume or petroleum.

8. Process according to claim 7, **characterized in that** the ethanol with a degree of purity of at least 95% by volume is ethanol 96% or bioethanol with a degree of purity of at least 99% by volume.

9. Process according to one of claims 6 to 8, **characterized in that,** to form the suspension, the untreated plastic powder is stirred into the liquid compatible therewith, and **in that** the mixing of the components including the added alkaline solution takes place in a stirring vessel at room temperature.

10. Process according to one of claims 6 to 9, **characterized in that** the alkaline solution is a sodium hydroxide solution or potassium hydroxide solution, wherein a sodium hydroxide solution is preferred.

11. Process according to one of claims 6 to 10, **characterized in that** the evaporation of the suspension and the drying of the evaporation residue is carried out in a vessel with a stirrer at a preferred temperature in the range from 70°C to 85°C, wherein a permanent circulation preferably takes place by means of the stirrer until a dry granulated plastic powder results.

12. Use of a reactive plastic powder according to one of claims 1 to 5, preferably produced according to one of claims 6 to 11, for repairing defective sites in plastic parts, in particular in sliding liners of snow sliding boards, **characterized in that** a defective, cleaned site in a plastic part is filled up fully with the reactive plastic powder and the latter is pressed flat, and then a cyanoacrylate is dripped on until the reactive plastic powder is soaked, wherein the alkaline substance present on the surface of the reactive plastic powder initiates the anionic polymerization of the cyanoacrylate and this exothermic chemical reaction leads to a rapid and permanent bonding and curing of the repaired site in the plastic part.

13. Use according to claim 12, **characterized in that** the cyanoacrylate is an alkyl cyanoacrylate, preferably selected from the group comprising methyl 2-cyanoacrylate, ethyl 2-cyanoacrylate, n-propyl 2-cyanoacrylate and n-butyl 2-cyanoacrylate, wherein ethyl 2-cyanoacrylate is particularly preferred.

14. Use according to claim 12 or 13, **characterized in that** at the end of the repair of a defective site in a plastic part excess material is removed with a metal stripping blade.

15. Plastic part or object with a plastic lining, **characterized in that** the plastic part or the plastic lining was repaired using a reactive plastic powder according to one of claims 1 to 5, which had preferably been produced according to one of claims 6 to 11, according to one of claims 12 to 14 together with cyanoacrylate, wherein the object with the plastic lining is in particular a snow sliding board with a sliding lining.

## Revendications

1. Poudre de matière plastique réactive pour réparer des pièces en matière plastique, **caractérisée en ce qu'elle** a subi un traitement de surface et présente de ce fait sur sa surface au moins une substance alcaline sélectionnée dans le groupe composé de l'hydroxyde de sodium et de l'hydroxyde de potassium.

2. Poudre de matière plastique réactive selon la revendication 1, **caractérisée en ce que** la substance alcaline, au moins au nombre de une, est l'hydroxyde de sodium.

3. Poudre de matière plastique réactive selon la revendication 1 ou 2, **caractérisée en ce qu'**elle repose sur un polymère, qui est une polyoléfine.

4. Poudre de matière plastique réactive selon la revendication 3, **caractérisée en ce que la** polyoléfine est sélectionnée dans le groupe comprenant le polyéthylène et le polypropylène, le polyéthylène étant préféré, et le polyéthylène étant de préférence un HDPE.

5. Poudre de matière plastique réactive selon l'une des revendications précédentes, **caractérisée en ce que** la poudre de matière plastique réactive présente une granulométrie comprise entre 0 µm et 400 µm, de préférence entre 0 µm et 300 µm, et de façon particulièrement préférée entre 0 µm et 200 µm.

6. Procédé de fabrication d'une poudre de matière plastique réactive selon l'une des revendications 1 à 5, **caractérisé en ce qu'une** poudre de matière plastique non traitée présentant une certaine granulométrie est mélangée à un liquide compatible avec celle-ci pour former une suspension, **en ce que** l'on ajoute à ce liquide, avant ou après le mélange avec la poudre de matière plastique non traitée, une solution alcaline contenant au moins une substance alcaline, **en ce qu'**après le mélange desdits composants, la suspension est concentrée par évaporation et le résidu d'évaporation est séché, et **en ce qu'**on obtient ainsi une poudre de matière plastique réactive et apte à l'écoulement ayant subi un traitement de surface, qui présente essentiellement la granulométrie d'origine et qui présente sur sa surface la substance alcaline, au moins au nombre de une.

7. Procédé selon la revendication 6, **caractérisé en ce que** le polymère de la poudre de matière plastique non traitée est une polyoléfine, de préférence du HDPE, et **en ce que** le liquide compatible avec celle-ci est de l'éthanol présentant un degré de pureté d'au moins 95 % en volume ou du pétrole.

8. Procédé selon la revendication 7, **caractérisé en ce que** l'éthanol présentant un degré de pureté d'au moins 95 % en volume est de l'éthanol à 96 % ou du bioéthanol présentant un degré de pureté d'au moins 99 % en volume.

9. Procédé selon l'une des revendications 6 à 8, **caractérisé en ce que,** pour former la suspension, on agite la poudre de matière plastique non traitée dans le liquide compatible avec celle-ci, et **en ce que** le mélange des composants, y compris la solution alcaline ajoutée, s'effectue dans un bac à agitation à température ambiante.

10. Procédé selon l'une des revendications 6 à 9, **caractérisé en ce que** la solution alcaline est une soude caustique ou une potasse caustique, la soude caustique **étant** préférée.

11. Procédé selon l'une des revendications 6 à 10, **caractérisé en ce que** la concentration par évaporation de la suspension et le séchage du résidu d'évaporation sont effectués dans un chaudron équipé d'un agitateur à une température préférée comprise dans la plage de 70 °C à 85 °C, l'agitateur assurant de préférence une circulation permanente, jusqu'à obtention d'une poudre de matière plastique sèche et apte à l'écoulement.

12. Utilisation d'une poudre de matière plastique réactive selon l'une des revendications 1 à 5, de préférence fabriquée selon l'une des revendications 6 à 11, pour réparer des zones endommagées de pièces en matière plastique, en particulier de revêtements de glissement pour planches de glisse sur neige, **caractérisée en ce qu'une** zone endommagée nettoyée d'une pièce en matière plastique est totalement remplie avec la poudre de matière plastique réactive et **en ce que** celle-ci est légèrement comprimée, puis **en ce que** l'on verse dessus goutte à goutte un cyano-acrylate jusqu'à ce que la poudre de matière plastique réactive soit imprégnée, suite à quoi la substance alcaline présente sur la surface de la poudre de matière plastique réactive initie la polymérisation anionique du cyano-acrylate, et cette réaction chimique exothermique conduit à une liaison et un durcissement rapides et durables de la zone réparée de la pièce en plastique.

13. Utilisation selon la revendication 12, **caractérisée en ce que le** cyano-acrylate est un cyano-acrylate d'alkyle, de préférence sélectionné dans le groupe comprenant le méthyl-2-cyano-acrylate, l'éthyl-2-cyano-acrylate, le n-propyl-2-cyano-acrylate et le n-butyl-2-cyano-acrylate, l'éthyl-2-cyano-acrylate étant particulièrement préféré.

14. Utilisation selon la revendication 12 ou 13, **caractérisée en ce qu'à** la fin de la réparation d'une zone endommagée d'une pièce en matière plastique, on élimine l'excédent de matériau à l'aide d'une lame de lissage métallique.

15. Pièce en matière plastique ou objet présentant un revêtement en matière plastique, **caractérisé en ce que** la pièce en matière plastique ou le revêtement en matière plastique a été réparé avec du cyano-acrylate selon l'une des revendications 12 à 14 en utilisant une poudre de matière plastique réactive selon l'une des revendications 1 à 5, qui avait été de préférence fabriquée selon l'une des revendications 6 à 11, l'objet présentant le revêtement en matière plastique étant en particulier une planche de glisse sur neige présentant un revêtement de glissement.
